# EUROPEAN PATENT APPLICATION

(11) **EP 4 621 005 A1**
(43) Date of publication of application: **24.09.2025**
(21) Application number: 23891686.0
(22) Date of filing: 17.11.2023
(51) Int. Cl.: C08L 5/00, B29C 41/36, B65D 65/46, C08F 8/00, C08F 216/06, C08J 5/18, C08L 29/04

(54) **WATER-SOLUBLE FILM, METHOD FOR PRODUCING SAME, DRUG PACKAGING BODY, AND METHOD FOR PRODUCING SAME**

(30) Priority: 18.11.2022 JP 2022184960
(71) Applicant: Mitsubishi Chemical Corporation, Tokyo 100-8251 (JP)
(72) Inventor: MURAMATSU Yusuke, Tokyo 100-8251 (JP); TANIGAWA Takuma, Tokyo 100-8251 (JP)
(74) Representative: Vossius & Partner Patentanwälte Rechtsanwälte mbB
(86) International application number: PCT/JP2023/041526
(87) International publication number: WO 2024/106541

(57) **Abstract**

A water-soluble film containing pullulan and a hydrophilic group-modified polyvinyl alcohol resin is provided as a water-soluble film that has sufficiently high compatibility between the pullulan and the polyvinyl alcohol resin, and is excellent in water solubility and film mechanical properties, and is useful for packaging applications.

## Description

### TECHNICAL FIELD

The present disclosure relates to a water-soluble film containing pullulan. More particularly, the present disclosure relates to a water-soluble film containing pullulan and a polyvinyl alcohol resin, and a chemical agent package using the same, and a method for producing the same.

### BACKGROUND ART

In recent years, in light of global environmental conservation, development of films with higher biodegradability using naturally-derived materials has been expected as an alternative to conventional plastic films made of petroleum-derived materials.

Meanwhile, as disclosed in JP-A-H5-001198 and JP-A-2005-528328, a water-soluble film using a water-soluble polysaccharide, pullulan, as a naturally-derived material is known. For example, JP-AH5-001198 describes a water-soluble film containing pullulan a polyvinyl alcohol and mentions that the film has excellent print suitability and adhesiveness. JP-A-2005-528328describes a film containing pullulan and a water-soluble polymer and mentions that the film is usable for edible applications.

### RELATED ART DOCUMENT

### PATENT DOCUMENT

PTL 1: JP-A-H5-001198
PTL 2: JP-A-2005-528328

### SUMMARY

### PROBLEMS TO BE SOLVED BY THE DISCLOSURE

Unfortunately, pullulan may be insufficient in compatibility with polyvinyl alcohol resins and other water-soluble polymers. In the water-soluble films in JP-A-H5-001198 and JP-A-2005-528328, the resulting films have poor physical properties and appearance and are insufficient in mechanical properties such as strength and stretchability particularly in individual packaging applications for foods and chemical agents that require excellent film formability. There is a need for further improvement for making tougher films with excellent formability. In individual packaging applications, appearance is also important and there is a need for further improvement.

In such a background, the present disclosure provides a water-soluble film with high compatibility between pullulan and a polyvinyl alcohol resin, having excellent water solubility, having excellent mechanical properties such as film strength and elongation, and usable for packaging applications, and a method for producing the same, and a chemical agent package and a method for producing the same.

### MEANS FOR SOLVING THE PROBLEMS

The inventors of the present disclosure have conducted elaborate studies in view of such a situation and found that a water-soluble film excellent in compatibility, water solubility, and film mechanical properties can be obtained by using a hydrophilic group-modified polyvinyl alcohol resin as a polyvinyl alcohol resin in combination with pullulan.

Since the polyvinyl alcohol resin is a biodegradable resin, the above object can be achieved without significantly reducing the biodegradability of the water-soluble film as a whole.

Specifically, the present disclosure has the following aspects.
[1] A water-soluble film containing pullulan and a hydrophilic group-modified polyvinyl alcohol resin.
[2] The water-soluble film according to [1], wherein the hydrophilic group-modified polyvinyl alcohol resin is an anionic group-modified polyvinyl alcohol resin.
[3] The water-soluble film according to [1] or [2], wherein a ratio (mass ratio) between the pullulan and the hydrophilic group-modified polyvinyl alcohol resin is 1/99 to 99/1.
[4] The water-soluble film according to any one of [1] to [3], further containing a plasticizer.
[5] The water-soluble film according to [4], wherein a ratio (mass ratio) between the pullulan and the hydrophilic group-modified polyvinyl alcohol resin is 5/95 to 80/20, and the plasticizer is present in a proportion of 5 to 60 parts by mass per 100 parts by mass of a total of the pullulan and the hydrophilic group-modified polyvinyl alcohol resin.
[6] The water-soluble film according to any one of [1] to [5], further containing a filler.
[7] The water-soluble film according to [6], wherein the filler is starch.
[8] The water-soluble film according to [7], wherein the starch is present in a proportion of 2 to 60 parts by mass per 100 parts by mass of the pullulan.
[9] The water-soluble film according to any one of [6] to [8], wherein the hydrophilic group-modified polyvinyl alcohol resin is an anionic group-modified polyvinyl alcohol resin, and a ratio (mass ratio) between the pullulan and the anionic group-modified polyvinyl alcohol resin is 5/95 to 80/20.
[10] The water-soluble film according to any one of [1] to [9], wherein the water-soluble film has a water content of 3 to 15% by mass.
[11] The water-soluble film according to any one of [1] to [10], wherein the water-soluble film is configured for chemical agent packaging.
[12] The water-soluble film according to any one of [1] to [10], wherein the water-soluble film is configured for food packaging.
[13] A method for producing the water-soluble film according to any one of [1] to [12], including: a casting step of preparing a film-forming material containing pullulan and a hydrophilic group-modified polyvinyl alcohol resin, and casting the film-forming material onto a cast surface; and a drying step of drying the film-forming material casted on the cast surface.
[14] A chemical agent package including a package bag formed from the water-soluble film according to [11], and a chemical agent contained in the package bag.
[15] The chemical agent package according to [14], wherein the chemical agent is a liquid detergent.
[16] A method for producing the chemical agent package according to [14] or [15], including steps of: preparing a first water-soluble film, a second water-soluble film, and a chemical agent; and allowing the first water-soluble film and the second water-soluble film to face each other, disposing the chemical agent between the first water-soluble film and the second water-soluble film, superimposing the first water-soluble film and the second water-soluble film on each other to bring the first water-soluble film and the second water-soluble film surrounding the chemical agent into abutment with each other, and press-bonding an abutment portion of the first and second water-soluble films.

### EFFECTS OF THE DISCLOSURE

The water-soluble film according to the present disclosure is excellent in compatibility, water solubility, and film mechanical properties, and also excellent in formability and sealability. The water-soluble film is therefore suitable for individual packaging applications and is excellent for individual packages for chemical agents and foods.

### EMBODIMENTS OF THE DISCLOSURE

The present disclosure will be described below based on exemplary embodiments for carrying out the present disclosure. However, it should be understood that the present disclosure is not limited to the embodiments described below.

In the present disclosure, "film" is meant to include "tape" and "sheet".

In the present disclosure, the expression "X to Y" (X and Y are each a given number) is intended to encompass "preferably more than X" or "preferably less than Y" unless otherwise specified, in addition to the meaning of "equal to or more than X and equal to or less than Y".

The expression "equal to or more than X" (X is a given number) or "equal to or less than Y" (Y is a given number) is intended to encompass "preferably greater than X" or "preferably less than Y".

Hereinafter, the present disclosure will be specifically described.

A water-soluble film according to the present disclosure means a film soluble in water around normal temperature (20°C).

In the present disclosure, the solubility of the film is determined as follows.

The film is cut into a size of 3 cm × 5 cm, which is put into a 1 L beaker containing water (1 L) and fixed with a jig. With the water temperature kept at 20°C, the water is stirred with a stirrer (rotor length 3 cm, rotation speed 750 rpm), and if insoluble particles of the film with a diameter of 1 mm or more are not visually recognized, the film is determined as being soluble.

The water-soluble film according to the present disclosure contains pullulan and a hydrophilic group-modified polyvinyl alcohol resin. A chemical agent package according to the present disclosure includes a package bag formed from the water-soluble film and a chemical agent contained in the package bag. These will be described below.

In the present disclosure, polyvinyl alcohol may be abbreviated as "PVA".

### <<Water-Soluble Film>>

### <Pullulan>

Pullulan is a kind of polysaccharide made of glucose alone and has a structure in which maltotriose units, each having three glucose molecules connected by α1-4 bonds, are connected by α1-6 bonds. Pullulan is usually obtained by cultivating microorganisms (a kind of filamentous fungi) in a culture medium having starch syrup. Pullulan is easily dissolved in water and has properties such as lubricity, adhesiveness, solidifying properties, attachable properties, stickiness, coating properties, and formability.

Pullulan may be modified by introducing a functional group to impart additional properties.

The proportion of the pullulan is preferably equal to or more than 3% by mass of the water-soluble film, more preferably equal to or more than 4% by mass, even more preferably equal to or more than 5% by mass, particularly preferably equal to or more than 8% by mass, especially preferably equal to or more than 10% by mass. The upper limit is preferably equal to or less than 90% by mass, more preferably equal to or less than 80% by mass, even more preferably equal to or less than 70% by mass, particularly preferably equal to or less than 60% by mass. When the proportion of the pullulan is within the above range, the mechanical properties of the film, particularly strength and transparency of the film tend to be excellent.

### <Hydrophilic Group-Modified PVA Resin >

The hydrophilic group-modified PVA resin used in the present disclosure preferably has, for example, at least one hydrophilic group selected from the group consisting of anionic groups such as carboxy, sulfonic acid, and phosphoric acid groups, pyrrolidone rings, and amino groups. Among those, the anionic groups are preferred, and carboxy and sulfonic acid groups are particularly preferred. The hydrophilic groups include salts, such as sodium and potassium, of the above functional groups.

Examples of the hydrophilic group-modified PVA resin include anionic group-modified PVA resins such as carboxy group-modified PVA resin, sulfonic acid group-modified PVA resin, and phosphoric acid group-modified PVA resin, pyrrolidone ring-modified PVA resins, and amino group-modified PVA resins.

### [Anionic Group-Modified PVA Resin]

The anionic group-modified PVA resin has an anionic group. Examples of the anionic group include carboxy, sulfonic acid, and phosphoric acid groups. Among those, the anionic group is preferably a carboxy group or a sulfonic acid group in terms of excellent solubility in water and chemical agent resistance.

The anionic group-modified PVA resin can be produced, for example, by saponifying a copolymer of a vinyl ester monomer and an unsaturated monomer having anionicity or by post-modifying a PVA resin.

Examples of the unsaturated monomer having an anionic group include carboxy group-containing unsaturated monomer, sulfonic acid group- or sulfonate group-containing unsaturated monomer, and phosphoric acid group-containing unsaturated monomer.

Examples of the carboxy group-containing unsaturated monomer include carboxy group-containing unsaturated compounds such as acrylic acid, methacrylic acid, crotonic acid, maleic acid, maleic anhydride, fumaric acid, and itaconic acid, compounds in which these carboxy groups are entirely or partially neutralized by bases such as alkali compounds (e.g., sodium hydroxide, potassium hydroxide), or monoalkyl esters of the carboxy group-containing unsaturated compounds such as methyl acrylate, ethyl acrylate, methyl methacrylate, monomethyl fumarate, and monomethyl maleate, and dialkyl esters of the carboxy group-containing unsaturated compounds such as diethyl fumarate and diethyl maleate. These esters typically have a carbon atom number of 1 to 20 in terms of cost efficiency and practicability, preferably a carbon atom number of 1 to 10, particularly preferably a carbon atom number of 1 to 4.

Among these, maleic acid compounds are preferred, and monomethyl maleate is even more preferred.

Examples of the sulfonic acid group- or sulfonate group-containing unsaturated monomer include olefin sulfonic acids such as vinyl sulfonic acid, allylsulfonic acid, and methallylsulfonic acid, or salts of the olefin sulfonic acids; sulfoalkyl maleates such as sodium sulfopropyl-2-ethylhexyl maleate, sodium sulfopropyl tridecyl maleate, and sodium sulfopropyl eicosyl maleate; sulfoalkyl(meth)acrylamides such as sodium sulfomethylacrylamide, sodium sulfo-t-butylacrylamide, sodium sulfo-S-butylacrylamide, and sodium sulfo-t-butylmethacrylamide; sulfoalkyl(meth)acrylates such as sodium sulfomethylacrylamide, sodium sulfo-t-butylacrylamide, sodium sulfo-S-butylacrylamide, and sodium sulfo-t-butylmethacrylamide. One or two or more unsaturated monomers selected from these unsaturated monomers may be used.

Examples of the phosphoric acid group-containing unsaturated monomer include phosphonocarboxylic acid compounds or alkali metal salts thereof.

Examples of the vinyl ester monomer copolymerized with the above unsaturated monomer include vinyl formate, vinyl acetate, vinyl trifluoroacetate, vinyl propionate, vinyl butyrate, vinyl caprate, vinyl laurate, vinyl versatate, vinyl palmitate, and vinyl stearate. These can be used alone or in combination of two or more. In practice, vinyl acetate is preferred.

As a method of the polymerization, any of known polymerization methods such as solution polymerization, emulsion polymerization, and suspension polymerization can be used. The polymerization is typically performed by solution polymerization using alcohol such as methanol, ethanol, or isopropyl alcohol as a solvent.

A polymerization catalyst can be selected as appropriate from known polymerization catalysts such as azo catalysts such as azobisisobutyronitrile, and peroxide catalysts such as acetyl peroxide, benzoyl peroxide, and lauroyl peroxide, according to the polymerization method. The polymerization catalysts can be used alone or in combination of two or more. The reaction temperature is selected from the range from 35°C to around the boiling point of the solvent.

The saponification can also be performed by a known method and typically performed in the presence of a saponification catalyst by dissolving the resulting polymer in alcohol. Examples of the alcohol include methanol, ethanol, and butanol. These can be used alone or in combination of two or more. The copolymer concentration in the alcohol is selected from the range of 20 to 50% by mass in terms of solubility.

Examples of the saponification catalyst include alkali catalysts such as alkali metal hydroxides such as sodium hydroxide, potassium hydroxide, sodium methylate, sodium ethylate, and potassium methylate, and alcoholates. Acid catalysts may be used. These can be used alone or in combination of two or more. The saponification catalyst is preferably used in the amount of 1 to 100 millimolar equivalents relative to the vinyl ester compound.

The anionic group-modified PVA resin used in the present disclosure has a modification degree of 1 to 15 mol%, even more preferably 2 to 10 mol%, particularly preferably 2 to 8 mol%, especially preferably 3 to 7 mol%. If the modification degree is too small, the solubility in water tends to be reduced. If too large, the productivity of the PVA resin tends to be reduced, or the biodegradability tends to be reduced. In addition, blocking is more likely to occur, resulting in poor practicability.

The anionic group-modified PVA resin used in the present disclosure preferably has a 4 mass% aqueous solution viscosity of 5 to 50 mPa·s as measured at 20°C, even more preferably 13 to 40 mPa·s, particularly preferably 17 to 30 mPa·s. If the viscosity is too small, the mechanical strength of the water-soluble film tends to be reduced. On the other hand, if too large, the productivity tends to be reduced due to high aqueous solution viscosity during film formation.

The anionic group-modified PVA resin used in the present disclosure preferably has an average saponification degree equal to or more than 80 mol%, particularly preferably 85 to 99.9 mol%, even more preferably 88 to 99 mol%, and especially preferably 90 to 98 mol%. If the average saponification degree is too high, the solubility in water tends to be reduced. If too low, the solubility of the water-soluble film in water tends to be reduced over time depending on the agent to be packaged.

In the present disclosure, the hydrophilic group-modified PVA resin may be used alone, or two or more of the hydrophilic group-modified PVA resins different in saponification degree, viscosity, modifying group, modification degree, and the like may be used in combination.

In the present disclosure, it is preferable that the anionic group-modified PVA resin is contained as the hydrophilic group-modified PVA resin, in terms of compatibility with pullulan.

In particular, the carboxy group-modified PVA resin and the sulfonic acid group-modified PVA resin are preferably used in terms of balance between compatibility and water solubility and ease of handling. In particular, the carboxy group-modified PVA is preferably used.

The hydrophilic group-modified PVA resin according to the present disclosure preferably has an average saponification degree equal to or more than 80 mol%, particularly preferably 82 to 99.9 mol%, even more preferably 85 to 99 mol%, and especially preferably 90 to 98 mol%. If the average saponification degree is too small, the solubility of the film in water tends to be reduced, or the solubility of the film tends to be reduced over time depending on the agent to be packaged. If the average saponification degree is too large, the solubility in water also tends to be reduced.

The hydrophilic group-modified PVA resin used in the present disclosure preferably has a 4 mass% aqueous solution viscosity of 5 to 60 mPa·s as measured at 20°C, particularly preferably 10 to 45 mPa·s, even more preferably 15 to 40 mPa·s. If the viscosity is too small, the mechanical strength of the water-soluble film tends to be reduced. If too large, the productivity tends to be reduced due to high aqueous solution viscosity during film formation.

The proportion of the hydrophilic group-modified PVA resin is preferably 10 to 90 % by mass of the water-soluble film, more preferably 20 to 80% by mass, even more preferably 30 to 70% by mass. When the proportion of the hydrophilic group-modified PVA resin is within the above range, the film mechanical properties, particularly elongation of the film, tend to be excellent.

The ratio (mass ratio) between the pullulan and the hydrophilic group-modified PVA resin is preferably pullulan/hydrophilic group-modified PVA resin = 1/99 to 99/1, particularly preferably 5/95 to 80/20, even more preferably 10/90 to 60/40, especially preferably 15/85 to 45/55.

If the proportion of the pullulan is too high, the compatibility with the hydrophilic group-modified PVA resin tends to be poor, and the solubility of the film in water may be reduced. In addition, the mechanical properties such as film strength tend to be reduced.

The water-soluble film according to the present disclosure can include a PVA resin other than the hydrophilic group-modified PVA resin to an extent that does not impair the object of the present disclosure. For example, an unmodified PVA may be used in combination in order to adjust film physical properties such as sealability and viscoelasticity.

When the unmodified PVA is used in combination, the proportion (mass ratio) of the unmodified PVA is preferably hydrophilic group-modified PVA resin/unmodified PVA = 97/3 to 50/50, even more preferably 95/5 to 70/30, particularly preferably 93/7 to 85/15. If the proportion is too high, the compatibility between the PVA resin and the pullulan tends to be reduced.

### <Plasticizer>

In the present disclosure, a plasticizer is preferably used in addition to the pullulan and the hydrophilic group-modified PVA resin in order to impart appropriate flexibility to the film. The plasticizer may be used alone or two or more plasticizers may be used in combination. It is preferable to use two or more plasticizers in combination in terms of mechanical properties and formability of the film.

Examples of the plasticizer include glycerol such as glycerin, diglycerin, and triglycerin, alkylene glycols such as diethylene glycol, triethylene glycol, polyethylene glycol, propylene glycol, polypropylene glycol, and dipropylene glycol, trimethylolpropane, and sugar alcohols such as sorbitol, xylitol, and maltitol. These can be used alone or in combination of two or more. Among these, glycerin, diglycerin, and polyethylene glycol are preferred in terms of easy availability and obtaining a plasticizing effect with a small amount, and sorbitol is preferred in terms of long-term stability of the package.

The proportion of the plasticizer is preferably 5 to 60 parts by mass per 100 parts by mass of a total of the pullulan and the hydrophilic group-modified PVA resin, more preferably 10 to 55 parts by mass, particularly preferably 15 to 55 parts by mass, even more preferably 18 to 50 parts by mass, 20 to 45 parts by mass. If the proportion of the plasticizer is too low, the plasticizing effect is low and the processability is reduced, or the toughness of the water-soluble film formed into a package tends to be reduced over time. If too high, the film strength tends to be reduced or blocking tends to occur.

### <Filler>

In the present disclosure, the water-soluble film may further contain a filler, if necessary.

The filler is contained in order to increase antiblocking properties. The filler is not limited, and any of organic fillers and inorganic fillers may be used. Particularly, organic fillers are preferably used. These can be used alone or in combination of two or more. The filler preferably has an average particle diameter of 0.1 to 50 µm, particularly preferably 1 to 35 µm.

The average particle diameter of the filler is calculated based on a D50 value of cumulative volume distribution (particle diameter of cumulative 50% of particles) measured by a laser diffraction particle size distribution analyzer.

The organic filler refers to a particulate substance (primary particles) of an organic compound in any form such as needle form, bar form, lamellar form, scale form, and spherical form, or an agglomerate (secondary particles) of the particulate substance.

The organic filler is mainly selected from polymer compounds. Examples include melamine resins, polymethyl (meth)acrylate resins, polystyrene resins, starches, polylactic acids, and other biodegradable resins. Among these, polymethyl (meth)acrylate resins, polystyrene resins, and biodegradable resins such as starches are preferred. In particular, starches are preferred in terms of dispersibility in the hydrophilic group-modified PVA resin.

Examples of the starches include raw starches (corn starch, potato starch, sweet potato starch, wheat starch, cassava starch, sago starch, tapioca starch, sorghum starch, rice starch, pea starch, kudzu starch, bracken starch, lotus starch, water chestnut starch, etc.), physically modified starches (α-starch, fractionated amylose, moist heat-treated starch, etc.), enzyme-modified starches (hydrolyzed dextrin, enzyme-decomposed dextrin, amylose, etc.), chemically degraded starches (acid-treated starch, hypochlorous acid-oxidized starch, dialdehyde starch, etc.), and chemically modified starch derivatives (esterified starch, etherified starch, cationized starch, crosslinked starch, etc.). Among these, the raw starches, particularly the corn starch and the rice starch, are preferably used in terms of easy availability and cost efficiency.

When the starch is used, the proportion of the starch to the pullulan is preferably 2 to 60 parts by mass per 100 parts by mass of the pullulan, more preferably 10 to 50 parts by mass, even more preferably 20 to 40 parts by mass. If the proportion of the starch is too low, blocking tends to occur. If too high, the sealability of the film tends to be reduced, or the formability during package production tends to be reduced.

The organic filler preferably has an average particle diameter of 2 to 50 µm, more preferably 4 to 45 µm, particularly preferably 10 to 40 µm, even more preferably 15 to 35 µm. If the average particle diameter is too small, the film is more susceptible to blocking. If too large, the particles of the filler are likely to agglomerate, resulting in poor dispersibility, or the film tends to suffer pinholes when stretched during film processing.

The inorganic filler refers to a particulate substance (primary particles) of an inorganic compound in any form such as needle form, bar form, lamellar form, scale form, and spherical form, or an agglomerate (secondary particles) of the particulate substance.

Examples of the inorganic filler include inorganic oxide compounds such as silica (silicon dioxide), diatomite, titanium oxide, calcium oxide, magnesium oxide, aluminum oxide, barium oxide, germanium oxide, tin oxide, and zinc oxide, talc, clay, kaolin, mica, asbestos, gypsum, graphite, glass balloons, glass beads, calcium sulfate, barium sulfate, ammonium sulfate, calcium sulfite, calcium carbonate, calcium carbonate whisker, magnesium carbonate, dawsonite, dolomite, potassium titanate, carbon black, glass fibers, alumina fibers, boron fibers, processed mineral fibers, carbon fibers, hollow carbon spheres, bentonite, montmorillonite, copper powder, sodium sulfate, potassium sulfate, zinc sulfate, copper sulfate, iron sulfate, magnesium sulfate, aluminum sulfate, aluminum potassium sulfate, ammonium nitrate, sodium nitrate, potassium nitrate, aluminum nitrate, ammonium chloride, sodium chloride, potassium chloride, magnesium chloride, calcium chloride, sodium phosphate, and potassium chromate. These can be used alone or in combination of two or more.

Among these, the inorganic oxide compounds and talc are preferred. In particular, titanium oxide, talc, and silica are preferred, and silica is even more preferred.

The inorganic filler preferably has an average particle diameter of 1 to 20 µm, particularly preferably 2 to 15 µm, even more preferably 3 to 10 µm. If the average particle diameter is too small, the flexibility and/or toughness of the film tends to be reduced or the film tends to be more susceptible to blocking. If too large, the film tends to suffer pinholes when stretched during film processing.

The proportion of the filler is preferably 1 to 30 parts by mass per 100 parts by mass of a total of the pullulan and the hydrophilic group-modified PVA resin, particularly preferably 1.5 to 25 parts by mass, even more preferably 2 to 20 parts by mass. If the proportion of the filler is too low, the film tends to be more susceptible to blocking. If too high, the flexibility and/or toughness of the film tends to be reduced.

### <Surfactant>

In the present disclosure, the water-soluble film may further contain a surfactant, if necessary.

The surfactant used in the present disclosure is contained in order to improve the peelability from a cast surface during film production. Typical examples include nonionic surfactants, cationic surfactants, and anionic surfactants.

Examples of the surfactant include polyoxyethylene nonyl phenyl ether, polyoxyethylene octyl nonyl ether, polyoxyethylene dodecyl phenyl ether, polyoxyethylene alkyl allyl ether, polyoxyethylene sorbitan monolaurate, polyoxyethylene sorbitan monopalmitate, polyoxyethylene sorbitan monostearate, polyoxyethylene sorbitan monooleate, polyoxyalkylene alkyl ether phosphate monoethanolamine salts, polyoxyethylene alkylamino ethers such as polyoxyethylene laurylamino ether and polyoxyethylene stearylamino ether, sorbitan monopalmitate, sorbitan monostearate, glycerol stearate, and sucrose fatty acid esters. These can be used alone or in combination of two or more. Among these, polyoxyalkylene alkyl ether phosphate monoethanolamine salts and polyoxyethylene laurylamino ether are preferred in terms of production stability. These surfactants may be used alone or in combination of two or more.

The proportion of the surfactant is preferably 0.01 to 3 parts by mass per 100 parts by mass of a total of the pullulan and the hydrophilic group-modified PVA resin, particularly preferably 0.05 to 2.5 parts by mass, even more preferably 0.1 to 2 parts by mass. If the proportion of the surfactant is too low, the peelability of the formed film from a cast surface of a film forming apparatus tends to be reduced, resulting in lower productivity. If too high, blocking tends to occur, or the adhesive strength tends to be reduced during sealing performed when the film is formed into a package.

### <Other Components>

The water-soluble film may contain other components such as another water-soluble polymer other than the hydrophilic group-modified PVA resin (e.g., sodium polyacrylate, polyethylene oxide, polyvinyl pyrrolidone, dextrin, chitosan, chitin, methyl cellulose, hydroxyethyl cellulose), perfume, antirust agent, colorant, bulking agent, defoaming agent, UV absorber, liquid paraffins, fluorescent brightener, and bitter component (e.g., denatonium benzoate) to an extent that does not impair the object of the present disclosure. These can be used alone or in combination of two or more.

The proportion of the other components is preferably equal to or less than 5 parts by mass per 100 parts by mass of the hydrophilic group-modified PVA resin, particularly preferably equal to or less than 1 part by mass, even more preferably equal to or less than 0.5 parts by mass. The lower limit is typically 0 parts by mass. If the proportion of the other components is too high, the compatibility with the pullulan tends to be reduced, and the durability tends to be reduced.

In the present disclosure, an antioxidant may be blended. Examples of the antioxidant include sulfites such as sodium sulfite, potassium sulfite, calcium sulfite, and ammonium sulfite, tartaric acid, ascorbic acid, sodium thiosulfate, catechol, and rongalite. Among these, the sulfites are preferred, and sodium sulfite is particularly preferred. The amount of the antioxidant is preferably 0.1 to 10 parts by mass per 100 parts by mass of the hydrophilic group-modified PVA resin, particularly preferably 0.2 to 5 parts by mass, even more preferably 0.3 to 3 parts by mass.

### <<Production of Water-Soluble Film>>

In the present disclosure, the pullulan and the hydrophilic group-modified PVA resin, preferably the plasticizer, and if necessary other components such as the filler and the surfactant as described above are blended and dissolved or dispersed using water to prepare a film-forming material, and the film-forming material is formed into a film.

### <Dissolution Step>

In a dissolution step, the blended components are dissolved or dispersed in water to prepare an aqueous solution or an aqueous dispersion as a film-forming material.

In preparation of the film-forming material, the pullulan, the hydrophilic group-modified PVA resin, and other additives may be mixed by any method. Examples of the mixing method include: a method in which the pullulan, the hydrophilic group-modified PVA resin, and other additives are mixed into a mixture, which is then mixed with water and dissolved in water; a method in which the pullulan, the hydrophilic group-modified PVA resin, and other additives are separately dissolved in water and the resulting solutions are mixed; and a method in which the pullulan and the hydrophilic group-modified PVA resin are separately dissolved in water and other additives are mixed with the resulting solutions and dissolved.

Normal-temperature dissolution, high-temperature dissolution, pressure dissolution, or the like is typically employed as a dissolution method when the components are dissolved in water. Among these, high-temperature dissolution and pressure dissolution are preferred in terms of less undissolved residues and excellent productivity.

In high-temperature dissolution, the dissolution temperature is typically 80 to 100°C, preferably 90 to 100°C. In pressure dissolution, the dissolution temperature is typically 80 to 130°C, preferably 90 to 120°C.

The dissolution time is typically 1 to 20 hours, preferably 2 to 15 hours, even more preferably 3 to 10 hours. If the dissolution time is too short, undissolved residues tend to remain, and if too long, the productivity tends to be reduced.

After dissolution, the resulting film-forming material is further subjected to a defoaming process. Exemplary methods of the defoaming include static defoaming, vacuum defoaming, and twinscrew extrusion defoaming. Among those, static defoaming and twinscrew extrusion defoaming are preferred.

The defoaming temperature is typically 50 to 100°C, preferably 60 to 95°C, particularly preferably 65 to 80°C. If the defoaming temperature is too high, the molecular chains of the pullulan tend to be broken, resulting in lower viscosity of the film-forming material. If the defoaming temperature is too low, the viscosity tends to be increased, requiring a longer time for defoaming, resulting in lower productivity.

The defoaming time is usually 2 to 30 hours, preferably 5 to 25 hours.

The film-forming material preferably has a solid content of 10 to 60% by mass, particularly preferably 12 to 50% by mass, even more preferably 15 to 40% by mass. If the solid content is too low, the productivity of the film tends to be reduced. If too high, the viscosity tends to be too high, requiring a longer time to defoam the film-forming material or causing die lines during film formation.

The film-forming material typically has a pH of 4 to 8, preferably 4.8 to 7.5.

### <Film Formation Step>

In a film formation step, the film-forming material prepared in the dissolution step is formed into a film, which is dried if necessary to prepare a water-soluble film having a water content less than 15% by mass.

As a film formation method, for example, a method such as melt extrusion and casting can be employed. In terms of accuracy in film thickness, casting is preferred.

In performing casting, for example, the film-forming material is ejected from a slit such as a T-slit die and casted onto a cast surface such as a metal surface of an endless belt or a drum roll, or a plastic substrate surface such as a polyethylene terephthalate film. The casted material is then dried and heated, if necessary, to produce a water-soluble film.

The water-soluble film peeled from the cast surface such as a plastic substrate surface in the film formation step is transported and taken up on a core, resulting in a film roll. The resulting film roll can be supplied as it is as a product. Preferably, the water-soluble film slit into a film width of a desired size can be supplied as a film roll.

The water-soluble film may have a plane surface. However, the film may be subjected to texture processing on one side or both sides, for example, by imparting an emboss pattern, a minute uneven pattern, or a special engraved pattern, in terms of antiblocking properties, sliding properties during processing, reduction in adhesion between the products, and appearance.

The thickness of the water-soluble film is selected as appropriate according to applications and the like, preferably 10 to 120 µm, particularly preferably 15 to 110 µm, even more preferably 20 to 100 µm. If the thickness is too small, the mechanical strength of the film tends to be reduced. If the thickness is too large, the speed of dissolution in water tends to be reduced and the film forming efficiency also tends to be reduced.

The width of the water-soluble film is selected as appropriate according to applications and the like, preferably 300 to 5000 mm, particularly preferably 500 to 4000 mm, even more preferably 600 to 3000 mm. If the width is too small, the production efficiency tends to be reduced. If too large, controlling slackness and film thickness tends to be difficult.

The length of the water-soluble film is selected as appropriate according to applications and the like, preferably 100 to 20000 m, particularly preferably 800 to 15000 m, even more preferably 1000 to 10000 m. If the length is too small, film switching tends to require time and effort thereby reducing the productivity. If the length is too large, tight winding tends to result in poor appearance.

The resulting water-soluble film preferably has a water content of 3 to 15% by mass in terms of mechanical strength and heat sealability, particularly preferably 5 to 9% by mass, even more preferably 6 to 8% by mass. If the water content is too low, the film tends to be too hard, leading to reduction in formability in making a package or reduction in impact resistance of the package. If too high, blocking tends to occur. The water content can be adjusted by setting drying conditions and moisture control conditions as appropriate.

The water content is measured in conformity with JIS K 6726 3.4, and the resulting volatile content is defined as water content.

The water-soluble film according to the present disclosure may be a monolayer or a multilayer structure in which another film or a resin layer is laminated.

The thus obtained water-soluble film according to the present disclosure is particularly useful for packaging (unit packaging) applications for chemical agents such as agricultural chemicals and detergents, and for edible applications (food packaging). Preferably, the foods to be packaged with the film may be in a granular form, a tablet form, or a powdery form, or may be dried foods such as ingredients and dried ingredients of instant foods.

### <<Chemical Agent Package>>

The chemical agent package according to an embodiment of the present disclosure includes a package bag formed from the resulting water-soluble film, and a chemical agent covered with the package bag. Since the chemical agent package includes a chemical agent packaged in the package bag formed from the water-soluble film, when the chemical agent with the package bag is put into water, the package bag (water-soluble film) on the surface is dissolved to expose the chemical agent, which is then dissolved or dispersed in water to fulfill the effect of the chemical agent. Thus, the chemical agent package according to an embodiment of the present disclosure is suitable as a chemical agent package containing a relatively small amount, such as a single dose, of a chemical agent.

Examples of the chemical agent include agricultural chemicals such as pesticide, disinfectant, and herbicide, fertilizers, and detergents. Detergents such as laundry detergents and dishwashing detergents are particularly preferred. The chemical agent may be liquid or solid. The solid chemical agent may be in a granular form, a tablet form, or a powdery form. The chemical agent is preferably dissolved or dispersed in water for use. In particular, the chemical agent package preferably contains a liquid detergent. The pH of the chemical agent may be alkaline, neutral, or acidic.

The liquid detergent preferably has a pH of 6 to 12 when dissolved or dispersed in water, particularly preferably 7 to 11. The liquid detergent preferably has a moisture content equal to or less than 15% by mass, particularly preferably 0.1 to 10% by mass, even more preferably 0.1 to 7% by mass. When the moisture content of the liquid detergent is within the above range, the water-soluble film tends to be free from gelation or insolubilization and have excellent water solubility.

The pH is measured in conformity with JIS K 3362 8.3. The moisture content is measured in conformity with JIS K 3362 7.21.3.

### <<Production of Chemical Agent Package>>

A known method can be employed to produce a chemical agent package by packaging a chemical agent such as liquid detergent using the water-soluble film according to the present disclosure.

For example, the chemical agent package can be produced by disposing a chemical agent between two water-soluble films (a first water-soluble film and a second water-soluble film) facing each other, and press-bonding an overlapping portion (abutment portion) of the water-soluble films surrounding the chemical agent and laminating the water-soluble films.

Specifically, a lower mold of a forming apparatus that has a recess with a shape that can receive a chemical agent inside is prepared, the first water-soluble film (bottom film) is secured to the lower mold, and the bottom film is formed into a shape that conforms to the lower mold.

On the other hand, the second water-soluble film (top film) is also secured to an upper mold of the forming apparatus. A chemical agent such as liquid detergent separately prepared is disposed (put) into the formed bottom film. Thereafter, the upper mold and the lower mold are clamped, so that the top film and the bottom film surrounding the chemical agent are brought into abutment with each other, and the abutment portion of the top and bottom films is press-bonded under a vacuum. After press-bonding, the vacuum is removed, resulting in a chemical agent package in which the chemical agent is contained in the water-soluble film.

Exemplary methods for press-bonding the films include a heat sealing method, a water sealing method, and an adhesive sealing method. Among those, the water sealing method is preferably used because press-bonding conditions and the like are easily controlled.

### EXAMPLES

The present disclosure will be described more specifically below using examples. However, it should be understood that the present disclosure is not limited to the following examples within the scope of the present disclosure.

In the examples, "parts" are based on mass.

The following ingredients were prepared for water-soluble films.
(PVA Resin)
   - Hydrophilic group-modified PVA resin.
      (1) Carboxy group-modified PVA resin: a 4% aqueous solution viscosity of 22 mPa·s as measured at 20°C, an average saponification degree of 94 mol%, and a monomethyl maleate modification degree of 2.0 mol%.
      (2) Sulfonic acid group-modified PVA resin: a 4% aqueous solution viscosity of 2.5 mPa·s as measured at 20°C, an average saponification degree of 88 mol%, and a sodium allylsulfonate modification degree of 2.5 mol%.
      (3) Sulfonic acid group-modified PVA resin: a 4% aqueous solution viscosity of 2.8 mPa·s as measured at 20°C, an average saponification degree of 99 mol% or more, and a sodium allylsulfonate modification degree of 2.5 mol%.
   - Unmodified PVA.
      (4) Unmodified PVA: a 4% aqueous solution viscosity of 18 mPa·s as measured at 20°C and an average saponification degree of 88 mol%.
(Pullulan)
   - Pullulan (available from Hayashibara Co., Ltd.)
(Plasticizer)
   - Glycerin
   - Sorbitol
(Filler)
   - Starch (corn starch, average particle diameter of 20 µm)

### [Example 1]

### Preparation of Water-Soluble Film

A 10% aqueous solution of the carboxy group-modified PVA resin (1) and a 10% aqueous solution of pullulan were mixed in proportions of 80 parts of the carboxy group-modified PVA resin and 20 parts of the pullulan, and further mixed with 15 parts of glycerin, resulting in a film-forming material which was an aqueous dispersion of the resin composition with a solid content of 10%. The resulting film-forming material was left to stand at room temperature to be defoamed.

The film-forming material after the static defoaming was poured into a 10 cm × 10 cm frame made on a polyester film and left to stand at 23°C and 50% RH for drying, resulting in a 100 µm-thick water-soluble film. The water-soluble film had a water content of 7.5% by mass.

### [Example 2]

A water-soluble film was prepared and evaluated in the same manner as in Example 1 except that the proportions of the carboxy group-modified PVA resin (1) and the pullulan were changed to those listed in Table 1 below.

### [Example 3]

A water-soluble film was prepared and evaluated in the same manner as in Example 1 except that the proportions of the carboxy group-modified PVA resin (1) and the pullulan were changed to those listed in Table 1 below, and another plasticizer and a filler were added as listed in Table 1 below.

### [Example 4]

A water-soluble film was prepared and evaluated in the same manner as in Example 1 except that the proportions of the carboxy group-modified PVA resin (1) and the pullulan were changed to those listed in Table 1 below.

### [Example 5]

A water-soluble film was prepared and evaluated in the same manner as in Example 1 except that the carboxy group-modified PVA resin (1) and the unmodified PVA resin (4) were used in combination as the PVA resin in the proportions listed in Table 1 below.

### [Example 6]

A water-soluble film was prepared and evaluated in the same manner as in Example 5 except that the proportions of the carboxy group-modified PVA resin (1) and the unmodified PVA resin (4) were changed to those listed in Table 1 below.

### [Example 7]

A water-soluble film was prepared and evaluated in the same manner as in Example 4 except that the sulfonic acid group-modified PVA resin (2) was used as the PVA resin.

### [Example 8]

A water-soluble film was prepared and evaluated in the same manner as in Example 4 except that the sulfonic acid group-modified PVA resin (3) was used as the PVA resin.

### [Comparative Example 1]

A water-soluble film was prepared and evaluated in the same manner as in Example 1 except that the unmodified PVA resin (4) was used as the PVA resin.

The prepared film-forming material had poor compatibility and suffered slight phase separation.

### [Comparative Example 2]

A water-soluble film was prepared and evaluated in the same manner as in Comparative Example 1 except that the proportions of the unmodified PVA resin (4) and the pullulan were changed to those listed in Table 1 below.

The prepared film-forming material had poor compatibility and suffered phase separation.

The compatibility, the solubility, and the mechanical properties of the resulting water-soluble films were evaluated based on the methods and criteria described below. The results are listed in Table 1 below.

### <Compatibility>

### [Evaluation Method]

Whether each of the water-soluble films had a sea-island structure was visually observed and evaluated based on the following criteria.

### [Evaluation Criteria]

(Very good) The water-soluble film had few sea-island structures, had almost no phase separation, and was transparent.
(Poor) The water-soluble film had a large island in a sea-island structure and clearly suffered phase separation.

### <Solubility>

### [Evaluation Method]

Each of the obtained water-soluble films was cut into a size of 3.5 cm × 3.5 cm, which was put into a 1 L beaker containing water (1 L) and fixed with a jig. With the water temperature kept at 20°C, the water was stirred with a stirrer (rotor length 3 cm, rotation speed 750 rpm). If dispersion of insoluble particles of the film with a diameter of 1 mm or more was not visually recognized, the film was determined as being soluble. The time taken for dissolution was evaluated based on the following criteria.

### [Evaluation Criteria]

(Very good) The film was dissolved in less than 120 seconds.
(Good) The film was dissolved in 120 to 300 seconds.
(Poor) The film was not dissolved even after 300 seconds.

### <Mechanical Properties>

### [Evaluation Method]

The "tensile strength" and the "tensile elongation" of each of the obtained water-soluble films were measured in conformity with JIS K 7127 (1999). The water-soluble film was left under a moisturecontrolled condition at 23°C and 50% RH for 24 hours before measurement. Then, under this environment, the tensile strength and the tensile elongation of the water-soluble film were measured using AUTOGRAPH AG-X Plus (available from Shimadzu Corporation) at a pulling rate of 200 mm/min (film width 15 mm, distance between chucks 50 mm). The measurement values were evaluated based on the following criteria.

### [Evaluation Criteria]

(Excellent) The tensile strength was 10 MPa or more, and the tensile elongation was above 300%.
(Very good) The tensile strength was 10 MPa or more, and the tensile elongation was 200 to 300%, or the tensile strength was 5 MPa or more and less than 10 MPa, and the tensile elongation was above 300%.
(Good) The tensile strength was 5 MPa or more and less than 10 MPa, and the tensile elongation was 200 to 300%.
(Poor) The tensile strength was 0 to less than 5 MPa, and/or the tensile elongation was less than 200%.

A package was prepared using each of the water-soluble films of Examples 1, 4, 5, 7, and 8, and the formability was evaluated.

Further, a package having a plurality of compartments was prepared using each of the water-soluble films of Examples 1 and 5, and the formability and the compression strength were evaluated based on the methods and criteria described below.

The results are listed in Table 2 below.

### Preparation of Package

A package was prepared for each of the obtained water-soluble films, according to the following procedure, using a package producing machine available from Engel Corporation.

The water-soluble film was left to stand under a moisturecontrolled condition at 23°C and 40% RH for 24 hours for controlling the moisture. Then, under this environment, the first water-soluble film (bottom film) was secured on a mold (A) (package to be formed: 45 mm in length, 42 mm in width, and 30 mm in height) having a recess at a lower section of an apparatus, and the second water-soluble film (top film) was also secured to an upper section of the apparatus so as to face the bottom film. The bottom film was heated for 4 seconds with a dryer that produces hot air at 100°C, and the bottom film was vacuumformed into a shape that conformed to the mold.

Subsequently, 34 mL of a commercially available laundry liquid detergent (formulation: 11% of propylene glycol, 7.5% of glycerin, 67% of a surfactant, and 14.2% of water, with a pH of 7.5) was poured into the recess of the formed bottom film. Then, 0.25 g of water was applied throughout the top film surface (80 mm in length, 140 mm in width), and the top film and the bottom film were press-bonded together. After press-bonding for 10 seconds, the vacuum was removed, resulting in a package (A).

An empty package (B) that contained no detergent was prepared under the same conditions as described above, using a mold (B) (package to be formed: 45 mm in length, 45 mm in width, and 20 mm in height) having a recess divided into three compartments.

### <Formability>

In preparation of the package, the conformability to the mold of the bottom film during vacuum forming was visually checked and evaluated based on the following criteria. In this case, the evaluation in preparation of the package (A) was denoted as "formability (A)", and the evaluation in preparation of the package (B) was denoted as "formability (B)".

### [Evaluation Criteria]

(Very good) The film conformed sufficiently to the mold in less than 30 seconds.
(Good) There was a slight gap between the film and the mold or it took 30 seconds or longer to conform sufficiently to the mold.
(Poor) The film was clearly separated from the mold and did not conform to the mold.

### <Compression Strength>

The compression strength of the liquid detergent package obtained using the mold (A) in production of the package was measured according to the method described below and evaluated based on the following criteria.

### [Evaluation Method]

The liquid detergent package produced by the method above was left to stand under an environment at 23°C and 40% RH for one hour. Then, under this environment, the compression strength at break of the liquid detergent package was measured at a testing rate of 200 mm/min using AUTOGRAPH AG-X Plus (available from Shimadzu Corporation). A load cell of 5 kN was used.

### [Evaluation Criteria]

(Very good) The compression strength was above 1000 N.
(Good) The compression strength was 300 to 1000 N.
(Poor) The compression strength was less than 300 N and the package was easily broken, or the package was broken because the seal surface easily peeled.

**Table 1**

| | Film-forming material (composition) | | | | | | Water-soluble film | | |
|---|---|---|---|---|---|---|---|---|---|
| | PVA resin | | Pullulan | Plasticizer | | Filler | Compatibility | Solubility | Mechanical properties |
| | | | | Glycerin | Sorbitol | | | | |
| Example 1 | PVA (1) carboxy group-modified | 80 parts | 20 parts | 15 parts | - | - | Very good | Very good | Very good |
| Example 2 | PVA (1) carboxy group-modified | 50 parts | 50 parts | 15 parts | - | - | Very good | Very good | Very good |
| Example 3 | PVA (1) carboxy group-modified | 76 parts | 24 parts | 20 parts | 20 parts | 8 parts | Very good | Very good | Very good |
| Example 4 | PVA (1) carboxy group-modified | 40 parts | 60 parts | 15 parts | - | - | Very good | Very good | Very good |
| Example 5 | PVA (1) carboxy group-modified PVA (4) unmodified | 72 parts | 20 parts | 15 parts | - | - | Very good | Very good | Very good |
| | | 8 parts | | | | | | | |
| Example 6 | PVA (1) carboxy group-modified PVA (4) unmodified | 40 parts | 20 parts | 15 parts | - | - | Good | Good | Very good |
| | | 40 parts | | | | | | | |
| Example 7 | PVA (2) sulfonic acid group-modified | 40 parts | 60 parts | 15 parts | - | - | Very good | Very good | Good |
| Example 8 | PVA (3) sulfonic acid group-modified | 40 parts | 60 parts | 15 parts | - | - | Very good | Very good | Good |
| Comparative Example 1 | PVA (4) unmodified | 80 parts | 20 parts | 15 parts | - | - | Poor | Good | Very good |
| Comparative Example 2 | PVA (4) unmodified | 60 parts | 40 parts | 15 parts | - | - | Poor | Poor | Very good |

**Table 2**

| | Film-forming material (composition) | | | | | | Package | | |
|---|---|---|---|---|---|---|---|---|---|
| | PVA resin | | Pullulan | Plasticizer | | Filler | Formability mold (A) | Formability mold (B) | Compression strength |
| | | | | Glycerin | Sorbitol | | | | |
| Example 1 | PVA (1) carboxy group-modified | 80 parts | 20 parts | 15 parts | - | - | Very good | Very good | Very good |
| Example 4 | PVA (1) carboxy group-modified | 40 parts | 60 parts | 15 parts | - | - | Very good | - | - |
| Example 5 | PVA (1) carboxy group-modified PVA (4) unmodified | 72 parts 8 parts | 20 parts | 15 parts | - | - | Very good | Very good | Very good |
| Example 7 | PVA (2) sulfonic acid group-modified | 40 parts | 60 parts | 15 parts | - | - | Very good | - | - |
| Example 8 | PVA (3) sulfonic acid group-modified | 40 parts | 60 parts | 15 parts | - | - | Very good | - | - |

The results of Examples indicate that the water-soluble film according to the present disclosure containing the pullulan and the hydrophilic group-modified PVA resin has good compatibility between the pullulan and the PVA resin, provides a transparent film having excellent appearance, and also has excellent water solubility. In addition, it can be understood that the water-soluble film according to the present disclosure has excellent mechanical properties, and has excellent formability in preparation of a package using the film and is therefore suitable for practical use for individual packaging applications.

Further, it can be understood that the water-soluble film according to the present disclosure has excellent formability even for a complicated shape, exhibits sufficient strength in the evaluation of compression strength, and has excellent water sealability, because no package was easily peeled at the seal surface and broken.

On the other hand, Comparative Examples using the unmodified PVA resin as the PVA resin have poor compatibility with the pullulan, and are unable to produce a homogeneous film-forming material and therefore have poor film formability: for example, a noncompatible portion becomes a defect during film forming, or a problem occurs in taking up the film. It can be understood that the resulting film is inferior in transparency and appearance. Further, it can be understood that Comparative Examples are inferior in solubility and not suitable for practical use for individual packaging applications.

While specific forms of the embodiments of the present disclosure have been shown in the above examples, the examples are merely illustrative and should not be interpreted in a limited sense. Modifications apparent to those skilled in the art are intended to be included in the scope of the present disclosure.

### INDUSTRIAL APPLICABILITY

The water-soluble film according to the present disclosure can be used for packaging (unit packaging) applications for chemical agents such as agricultural chemicals and detergents, (water pressure) transfer films, sanitary supplies such as napkins and disposal diapers, waste disposal supplies such as ostomy bags, medical supplies such as blood-absorbing sheets, and temporary base materials for seeding sheets, seeding tapes, and embroidery bases.

The film according to the present disclosure, which is a blend film of a PVA resin used in foods and pharmaceuticals and a naturally-derived material, is also useful for edible applications (food packaging).

## Claims

1. A water-soluble film comprising pullulan and a hydrophilic group-modified polyvinyl alcohol resin.

2. The water-soluble film according to claim 1, wherein the hydrophilic group-modified polyvinyl alcohol resin comprises an anionic group-modified polyvinyl alcohol resin.

3. The water-soluble film according to claim 1 or 2, wherein a ratio (mass ratio) between the pullulan and the hydrophilic group-modified polyvinyl alcohol resin is 1/99 to 99/1.

4. The water-soluble film according to any one of claims 1 to 3, further comprising a plasticizer.

5. The water-soluble film according to claim 4,
wherein a ratio (mass ratio) between the pullulan and the hydrophilic group-modified polyvinyl alcohol resin is 5/95 to 80/20, and
wherein the plasticizer is present in a proportion of 5 to 60 parts by mass per 100 parts by mass of a total of the pullulan and the hydrophilic group-modified polyvinyl alcohol resin.

6. The water-soluble film according to any one of claims 1 to 5, further comprising a filler.

7. The water-soluble film according to claim 6, wherein the filler comprises starch.

8. The water-soluble film according to claim 7, wherein the starch is present in a proportion of 2 to 60 parts by mass per 100 parts by mass of the pullulan.

9. The water-soluble film according to any one of claims 6 to 8,
wherein the hydrophilic group-modified polyvinyl alcohol resin comprises an anionic group-modified polyvinyl alcohol resin, and
wherein a ratio (mass ratio) between the pullulan and the anionic group-modified polyvinyl alcohol resin is 5/95 to 80/20.

10. The water-soluble film according to any one of claims 1 to 9, wherein the water-soluble film has a water content of 3 to 15% by mass.

11. The water-soluble film according to any one of claims 1 to 10, wherein the water-soluble film is configured for chemical agent packaging.

12. The water-soluble film according to any one of claims 1 to 10, wherein the water-soluble film is configured for food packaging.

13. A method for producing the water-soluble film according to any one of claims 1 to 12, the method comprising:
preparing a film-forming material comprising pullulan and a hydrophilic group-modified polyvinyl alcohol resin, and casting the film-forming material onto a cast surface; and
drying the film-forming material casted on the cast surface.

14. A chemical agent package comprising: a package bag comprising the water-soluble film according to claim 11; and a chemical agent contained in the package bag.

15. The chemical agent package according to claim 14, wherein the chemical agent comprises a liquid detergent.

16. A method for producing the chemical agent package according to claim 14 or 15, the method comprising:
preparing a first water-soluble film, a second water-soluble film, and a chemical agent;
allowing the first water-soluble film and the second water-soluble film to face each other,
disposing the chemical agent between the first water-soluble film and the second water-soluble film,
superimposing the first water-soluble film and the second water-soluble film on each other to bring the first water-soluble film and the second water-soluble film surrounding the chemical agent into abutment with each other, and
press-bonding an abutment portion of the first and second water-soluble films.
